# EUROPEAN PATENT SPECIFICATION

(11) **EP 2 047 747 B1**
(45) Date of publication and mention of the grant of the patent: **08.12.2010**
(21) Application number: 08017602.7
(22) Date of filing: 08.10.2008
(51) Int. Cl.: A01K 97/02

(54) **Swimfeeder**
Futterkorb
Dispositif d'amorçage pour la pêche

(30) Priority: 12.10.2007 GB 0719916
(43) Date of publication of application: 15.04.2009
(73) Proprietor: Drennan International Limited, Oxford, OX4 2EX (GB)
(72) Inventor: Drennan, Peter, John, Oxon OX44 9HG (GB)
(74) Representative: Blood, Marlon

(56) References cited:
- EP-A- 1 800 538
- WO-A-94/18826
- GB-A- 2 092 873
- GB-A- 2 211 382
- JP-A- 8 112 053

## Description

The present invention relates to the field of swimfeeders.

A swimfeeder Is a device used in fresh water angling that is attached to a fishing line near to the hook and which holds bait for attracting fish to the hook. The swimfeeder is adapted to be cast and to sit on the river bed. A variety of types of bait may be used with the swimfeeder, including particulate bait such as maggots, seeds etc, and ground bait.

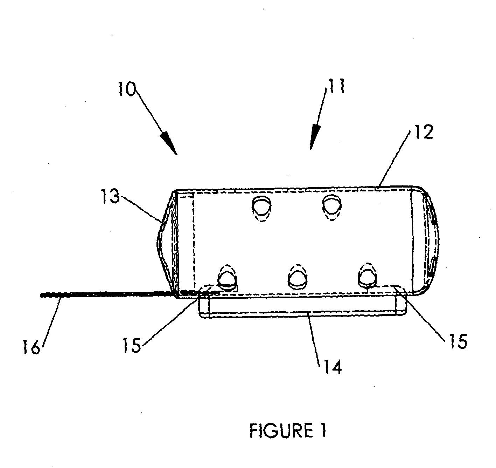

A known oval block swimfeeder is shown in Figure 1 from a side view. The swimfeeder 10 comprises an elongate body 11 having a main portion 12 open at one end and a cap portion 13 which serves to close off the open end. The body 11 is weighted at its base by a base weight 14 made from lead. The base weight 14 is formed with Integral legs 15 and is attached to the main portion 12 of the body 11 by inserting the legs 15 into apertures In the base and bending the legs 15 over to the position shown in Figure 1 (when the cap portion 13 is removed) to prevent the withdrawal of the legs 15 from the apertures and thereby secure the base weight 14 to the underside of the body 11. The swimfeeder 10 is attached to a fishing line by an eye (not visible from the Figure 1 view) formed in a connection tab 16.

Being at the opposite end of the swimfeeder 10 to the connection tab 16, the end of the main portion 12 of the body 10, opposite to that of the cap portion 13, and the adjacent minor face of the base weight 14 serve as the leading surfaces when the swimfeeder 10 is cast and also become the surfaces which face upstream when the swimfeeder is in situ on the river bed, The centre of mass of the swimfeeder is approximately half way along the longitudinal axis of the base weight 14.

EP1800538 discloses a swimfeeder with an elongate body for holding bait with an end cap which is also an end weight of the swimfeeder. A side weight is also provided which comprises an elongate part for attaching in a recess provided in the exterior surface of the elongate body.

WO94/18826 discloses a holder device for delivering bait. The device comprises a cylindrical housing and a ballast connected to one end thereof.

JP08112053 discloses a bait dropper which is designed to open and hence release bait on impact with the bottom. The weight of a lower part of the body is heavier than an upper part.

The present Invention is based on the realisation that the performance of a swimfeeder in casting and in holding bottom can be improved through adjustments in the streamlining and distribution of the mass of the weight of the prior art swimfeeders like that shown in Figure 1.

With this in mind, according to claim 1, the present invention provides a swimfeeder comprising a body defining a bait chamber, and a base weight engaged with the body, the swimfeeder being elongate and having a smoothly curved profile at a first end, and the base weight comprising an elongate slab having an upper major face, a lower major face, a first end located at the first end of the swimfeeder and a second opposite end, the first end of the base weight being shaped to match the profile of the first end of the swimfeeder body, wherein the base weight is shaped such that the centre of mass of the swimfeeder Is located toward the first end of the swimfeeder.

A swimfeeder, In accordance with the present invention, having a streamlined first end and a centre of mass biased toward that end is stable In flight and accurately directed when cast. In addition, when in situ on the river bed with the first surface facing upstream, the low resistance presented to the current by the first end assists the swimfeeder hold bottom. The biasing of the centre of mass toward the first end further assists with holding bottom.

Since the material from which the body Is made is typically of a far lower density than that from which the weight is made, the location of the centre of mass of the swimfeeder is determined largely by the shape of the weight and where the weight is fixed In relation to the body.

In one embodiment, the necessary biasing can be achieved by placing all the mass of the base weight at the first end of the swimfeeder. However, this arrangement is not preferred as it concentrates too much of the mass of the base weight to the first end and leaves the second opposite end of the swimfeeder under-weighted, which can have a deleterious impact on the way the swimfeeder holds bottom.

In a preferred embodiment, the lower major face of the slab may serve as all or part of the bottom of the swimfeeder. Having the base weight in the form of a slab enables its mass to be widely distributed around the base region of the swimfeeder which assists the swimfeeder in holding bottom.

When using a base weight in the form of a slab, the necessary biasing of mass toward the first end of the swimfeeder can be achieved by appropriate off-centre positioning of the slab relative to the body. Shaping the first end of the slab to match said smoothly curved profile of the first end of the swimfeeder, according to the invention, enables the slab to be positionally offset toward the first end of the swimfeeder while making efficient use of the space available in and/or around the body. In a preferred embodiment which is subsequently described and illustrated, surfaces of the body at the first end of the swimfeeder and surfaces at the first end of the slab together provide said smoothly curved profile. In another embodiment, the first end of the slab may not form part of the external surface of the swimfeeder at Its first end but, instead, may be located behind an external wall of the body. In this embodiment, the external wall by itself defines the smoothly curved profile of the first end of the swimfeeder, while the first end of the slab matches the shape of the external wall but is located inwardly from it. Matching preferably occurs in both the horizontal and vertical directions.

The necessary biasing of mass toward the first end may also be achieved by shaping the base weight such that its major faces have sides which outwardly taper from its second end to its first end. Additionally, or alternatively, there may a local thickening in depth of the slab at its first end.

Preferably, at the first end of the swimfeeder, the first end of the base weight extends across the entire width of the swimfeeder.

In a preferred embodiment, the body comprises a base structure having an external surface at the lowermost portion thereof, and a holding surface inwardly disposed with respect to said external surface; and wherein the base weight is held in contact with the holding surface such that a face of the base weight provides a bottom surface for the swimfeeder, and most of the mass of the base weight is located upwardly of said external surface. In another embodiment, the base weight can be mounted, as in Figure 1, to the external underside of the body.

The weight can be fixed to the body using the folding leg approach as shown in Figure 1, or the pin and hole approach described later.

Throughout this specification, where reference is made to a river, similar considerations also apply to lakes and other like fresh water expanses. In addition, in the context of the present invention, directional or orientational terms such as "bottom" , "lowermost", "horizontal" and the like are to be construed in the context of the swimfeeder being in its intended orientation whilst sitting on the river bed unless otherwise stated.

Exemplary embodiments of the invention are hereinafter described with reference to the accompanying drawings, in which:
Figure 1 shows a side view of a known oval blockend swimfeeder;
Figure 2 shows a perspective view of a swimfeeder in accordance with an embodiment of the invention;
Figure 3 shows a side view of the Figure 2 swimfeeder;
Figure 4 shows an end view of the Figure 2 swimfeeder;
Figure 5 shows a view from below of the Figure 2 swimfeeder;
Figure 6 shows a longitudinal section view of the swimfeeder of Figure 2 taken along the axis A-A;
Figure 7 shows a similar view to Figure 6 in which the base weight used in Figures 2-6 has been replaced with a lighter one;
Figure 8 shows the same view as Figure 5 when the swimfeeder has its base weight removed; and
Figures 9(a) and 9(b) illustrate the fixing of the base weight to the swimfeeder body.

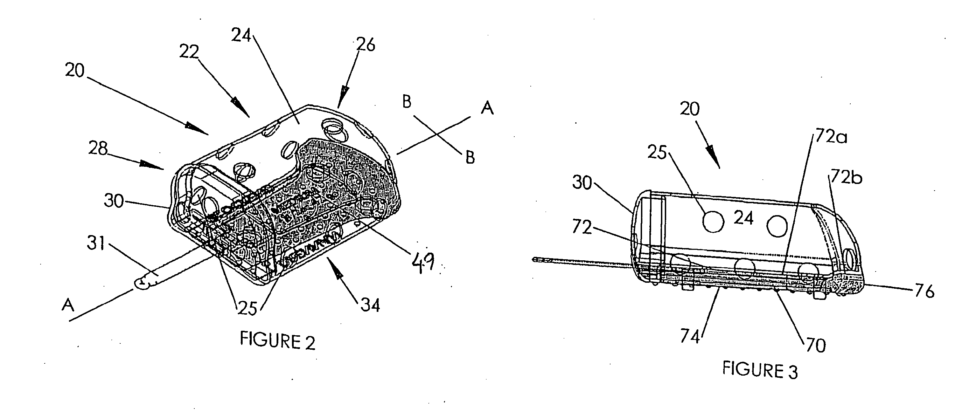

A swimfeeder for fresh water angling in accordance with a preferred embodiment is generally designated 20. Referring to Figure 2, the swimfeeder 20 comprises a body 22 made from plastics material. The body 22 is elongate and has a first end 26 and a second end 28. The body 22 consists of a hollow main portion 24 have an opening at one end and a cap portion 30 which closes off the opening with an interference fit at the second end 28 of the body 22. The swimfeeder 20 further comprises a connection tab 31 comprising a nylon tab part fitted within a silicone sleeve. The connection tab 31 includes an eye 31a at one end by which the swimfeeder 20 is attached to a fishing line. The connection tab 31 extends from an anchoring point within the main portion 24, as is described later, through a recess in the cap portion 30. The recessing of the sleeve avoids using a butt joint which would provide a possible site for a line trap. The nylon tab itself is flexible enough to allow the cap portion 30 to be dislodged from the main portion 24 to allow easy filling of the swimfeeder 20 with bait, but strong enough to support the whole weight of the swimfeeder and withstand the casting forces. The main portion 24 is generally 'D'-shaped in cross-section with the wall corresponding to the curved portion of the 'D' being designated 32. A base structure 34 corresponds generally to the straight portion of the 'D'.

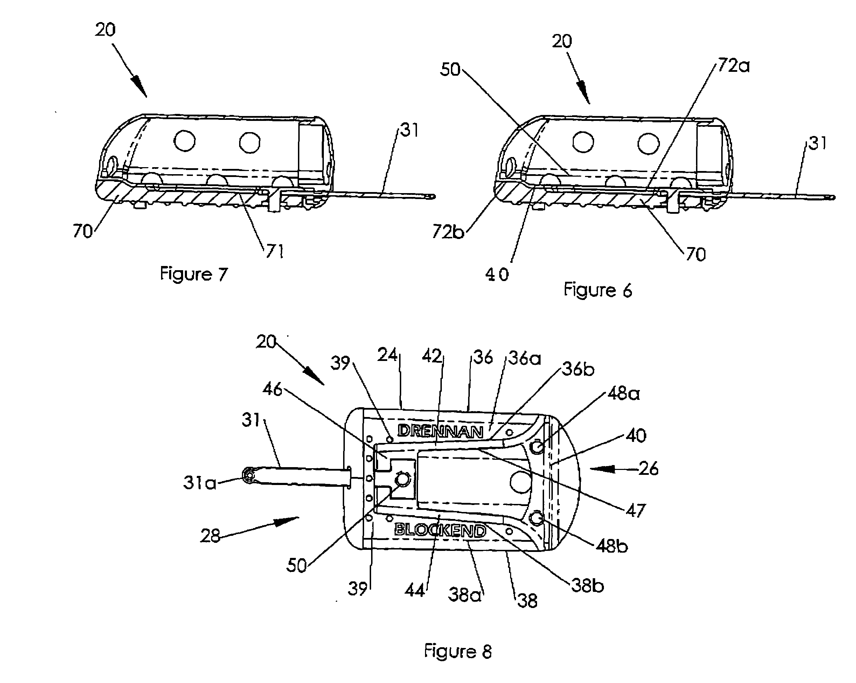

As best seen from Figure 8, the base structure 34 comprises a pair of arms 36, 38 disposed on opposite sides of the body 22, each having a lowermost surface 36a, 38a, and a side wall 36b, 38b. The arms 36, 38 extend in a generally longitudinal direction along the main portion 24 with the side walls gently tapering away from one another from the cap portion 30 towards, but terminating before, the first end 26. Just before the arms 36, 38 terminate, the side walls 36b, 38b are more strongly tapered. The lowermost surfaces 36a, 36b are generally flat and have a pattern of small surface pimples 39 to promote grip on the river bed. The base structure 34 further comprises holding surfaces in the form of flanges 40, 42, 44, 46 disposed between, and upwardly recessed relative to, the lowermost surfaces 36a, 38a. The flange 40 is disposed at the first end 26 body 22 and the flange 46 is disposed at the other end of the main portion 24. The flanges 42, 44 run longitudinally along the main portion 24 so as to connect the flanges 40, 46 and define therebetween an aperture 47. The flanges mark the upper boundary between the base structure 34 and a region or chamber 49 for bait located above the flanges. The flanges 42, 44, 46 are horizontal and generally at the same height above the bottom surfaces 36a, 38b, whereas the flange 40 slopes upwardly beyond the height of the flanges 42, 44, 46 as it approaches the first end 26. The body 22 further comprises a plurality of bait evacuation holes 25 through which bait in the bait chamber 49 can egress. The holes are provided on both the main portion 24 and the cap portion 30, but those on the cap portion 30 are larger. They can be larger as there is no risk of spillage of bait from those holes in while preparing to cast as the cap portion 30 is always uppermost.

The body 22 further comprises a plurality of rigid, integrally-formed, fixing pins 48a, 48b, 50 projecting downwardly from the holding surfaces. The fixing pins 48a, 48b project from the first end flange 40 at positions equally and oppositely offset from a central longitudinal axis of the body 22. The fixing pin 50 projects from the second end flange 46 at a position on a central longitudinal axis of the body 22. The attachment tab 30 is anchored to the fixing pin 50.

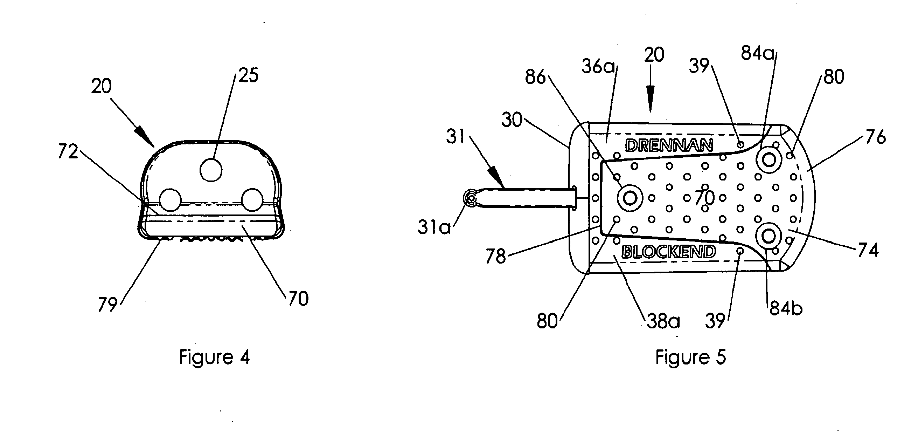

The swimfeeder 20 further comprises a base weight 70 made from lead. Referring to Figure 3, the base weight 70 is shaped generally in the form of a slab having a first, upper major face 72 and a second, lower major face 74. The face 74 is generally flat and includes an array of small surface pimples 80 to promote grip on the river bed. Referring to Figure 5, the major faces 72, 74 are shaped such that the weight 70 is elongate with a first wide end 76 having a minor end face which is curved in a direction across the slab. The weight 70 tapers inwardly from the first wide end 76 to a second narrow end 78 having a minor end face which is straight in a direction across the slab. The upper face 72 is provided with a number of surface features which facilitate co-operation with the main portion 24, that is a slightly elevated central plateau 72a which matches the shape of the aperture 48 and, in the vicinity of the first end 76, a thickened or upwardly bulging portion 72b which matches the lower surface contour of the flange 46. The weight 70 further comprises holes 84a, 84b near the first wide end 76 and a hole 86 near the second end 78.

The dimensions of the base weight 70 are matched to those of the cavity/recess defined by the internal surfaces of the base structure 34, namely the flanges 40, 42, 44, 46 and the side walls 36b, 38b, such that when the fixing pins 48a, 48b, 50 are fully inserted into the holes 84a, 84b, 86 from the direction of the upper face 72, the weight is loaded within the base structure 34 and abuts against the flanges 40, 42, 44, 46 as can be seen in Figure 6. The dimensional matching between the base weight 70 and internal surfaces of the base structure 34 results in the lower face 74 of the base weight being flush with the lowermost surfaces 36a, 36b of the base structure, whereby together they form a composite flat bottom for the swimfeeder 20. It will also be noted from, for example, Figure 3 that the first wide end 76 of the base weight 70 is shaped such that it fits in with the profile of the neighbouring first end 26 of the body 22 in both the horizontal and vertical directions so as to provide the swimfeeder 20 as a whole with a curved continuous profile at that end. Also, from Figure 6, it can be seen that the central plateau 72a of the upper face 72 sits flush with an upper surface of the flange 40 to form a generally flat floor to the bait chamber 50.

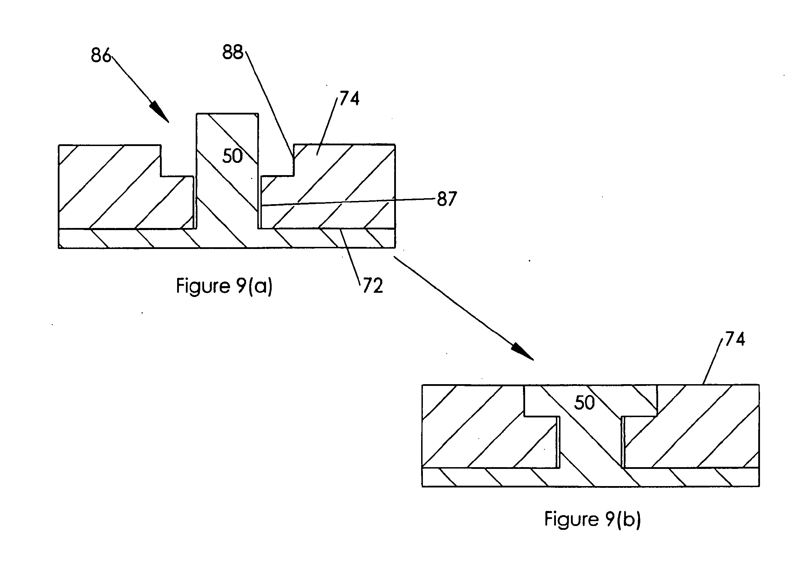

Figure 9(a) shows a cross-sectional view through the hole 86 through which the fixing pin 50 has been inserted. The hole 86 is step-tapered and comprises a narrow section, defined by a wall 87, having cross-sectional dimensions similar to that of the pin 50 adjacent to the first major face 72, and a wide section, defined by a wall 88, having cross-sectional dimensions larger than those of the pin 50 adjacent to the second major face 74. It will be noted that the fixing pin 50 is long and when fully inserted into the hole 86 from the side of the first major face 72 projects beyond the second major face 74. In order to permanently fix the base weight 70 to the main portion 24 of the body 22, the swimfeeder 20 is inverted from its normal orientation such that the fixing pin 50 is pointing upwardly as shown in Figure 9(a). Then, the fixing pin 50 is heat staked or ultrasonically welded causing the fixing pin 50 to melt and so collapse downwardly under gravity, filling the wide section of the hole 86, as illustrated in Figure 9(b), and thereby acquiring a mushroom-shaped/thickened distal end portion. On cooling and re-solidifying in this new shape, it becomes impossible for the material which made up the fixing pin 50 to be withdrawn back through the hole 86 and so fixing is achieved. During the cooling and re-solidifying, the fixing pin material may become bonded to the wall 88 defining the wide section of the hole 86. This procedure repeated for the other fixing pins 48a, 48b and holes 84a, 84b. Using this technique, the base weight 70 can be permanently fixed to the main body 24, and because this technique requires only a shaped slab of lead and does require that the slab have any vulnerable deformable formations, there is a reasonable expectation that, with careful handling, those slabs can be transported to the assembly point and used without further reparative processing. With the issue of bruising and deformation in mind, it is preferred that the holes 84a, 84b, 86 are kept small, for example, to accommodate 3mm diameter pins.

In use, when the swimfeeder 20 loaded with bait is cast, the base weight 70 in the base structure 34 ensures that the swimfeeder 20 comes to rest on the river bed with its composite flat bottom surface, comprising the lowermost surfaces 36a, 36b of the main portion 24 and the lower major face 74 of the base weight 70, in contact with the river bed. The shape of the base weight 70 is such that its centre of mass is significantly closer its first end 76 than its second end 78. It will be recalled from the preceding description that the biasing of the centre of mass towards the first end 76 stems from both the lateral tapering of the side walls and the thickened portion 72a local to the first end 76. It will be appreciated that because the density of the lead from which the base weight 70 is made is much greater than the density of the plastics material from which the body 22 is made, the base weight 70 is much heavier than the body 22, and hence the centre of mass of the swimfeeder 20 as a whole is mainly determined by the shape of the base weight 70. As a result of this biasing, there is a pronounced tendency for the swimfeeder 20 to become orientated with that first end 76 facing upstream. Hereinafter, that end of the swimfeeder 20 will be referred to as the upstream end, whereas the end with the connection tab 31 will be referred to as the downstream end. The biasing of the centre of mass towards the upstream end also has a benefit during casting. During casting, the upstream end is the leading end (since it is opposite the end with the connection tab 31) and having the mass biased towards the leading end assists with the stability of the swimfeeder 20 during flight and hence facilitates more accurate casting and casting to a greater distance.

In situ on the river bed, the swimfeeder 20 is able to hold bottom well for a variety of design reasons. The elimination of any differential between the lower face of the base weight 70 and the lowermost surfaces 36a, 36b of the main portion 24 ensures that not only has the possibility for the line to become trapped been eliminated, but so has the source of any unwanted uplift. In addition, since the upstream end of the swimfeeder 20 presents a curved, continuous and hence streamlined face to the current, it presents less resistance to the current and is, thus, less prone to being disturbed especially in a strong current. The streamlining effect is also enhanced by the fact that recessing the base weight enables a more squat (i.e. lower height-to-width ratio) swimfeeder to be made for a given chamber volume and mass of weight. In addition, the surface pimples 39, 80 on the lowermost surfaces 36a, 36b of the body 22 and on the face 74 of the base weight 70 both serve to further steady the swimfeeder 20.

The swimfeeder 20 is found to retrieve very smoothly. Failure to retrieve in a smooth manner, for example, if the swimfeeder 20 excessively oscillates or varies in the resistance to the water that it offers can result in the non-uniform laying of the line onto the reel spool of the fishing rod, which will have a negative impact on the subsequent casting accuracy. The factors governing the smoothness of the retrieve of the swimfeeder 20 are not known with certainty but the absence of abrupt edges made possible by the recessing of the base 70 and the distinctive, experimentally selected, cross-sectional profile of the body 27, as best seen in Figure 4, are thought to be contributing factors. The overall squatness of the swimfeeder 20, as previously discussed, may be a further factor.

An alternative embodiment of the invention is shown in Figure 7. The Figure 7 embodiment differs from that in Figure 6 in that the base weight 70 has been replaced by a lighter lead base weight 70. The base weight 70' is lighter as it has been hollowed out in a central region of the upper face 72 (in the region corresponding to where the plateau 72a exists in the base weight 70) to effect the reduction in mass. It can be seen in Figure 7 that when the base weight 70' is used, its upper face does not co-operate with the flanges 40, 46 to provide a flat floor to the bait chamber 49 but is somewhat recessed. The recess is labelled 71 in Figure 7. Other than in that respect, the impact on the performance of the design is minimal. Using base weights modified in this way allows the manufacturer to make swimfeeders weighted to a meaningful different range of masses using the same body 22 to meet the needs of the angler, while being advantageous to the manufacturer in terms of tooling costs, avoid tooling changes during the manufacture of the body 22 and not escalating component stock diversity. For a small swimfeeder, typical weights may be 1oz (28g) or 1.5 oz (43g). For a medium swimfeeder, typical weights may be 1.5oz (43g) or 2oz (57g). For a large swimfeeder, typical weights may be 2oz (57g) or 2.5oz (71g).

## Claims

1. A swimfeeder (20) comprising a body (22) defining a bait chamber (49), and a base (70) weight engaged with the body (22), the swimfeeder being elongate and having a smoothly curved profile at a first end (26), and the base weight (70) comprising an elongate slab having an upper major face (72), a lower major face (74), a first end (76) located at the first end (26) of the swimfeeder and a second opposite end (78), the first end (76) of the base weight being shaped to match the profile of the first end (26) of the swimfeeder body (22), wherein the base weight (70) is shaped such that the centre of mass of the swimfeeder is located toward the first end (26) of the swimfeeder.

2. A swimfeeder as In Claim 1, wherein the major faces (72,74) of the slab have sides which outwardly taper from its second end (78) to its first end (76).

3. A swimfeeder as in Claims 1 or 2, wherein, at the first end (26) of the swimfeeder, the slab extends across the entire width of the swimfeeder.

4. A swimfeeder as in any of Claims 1 to 3, wherein the first end (78) of the slab is locally thickened.

5. A swimfeeder as In any preceding Claim, wherein a surface of the body (22) at the first end (26) of the swimfeeder and a surface at the first end (76) of the slab together provide said smoothly curved profile.

6. A swimfeeder as in any of Claims 1 to 4, wherein the first end of the slab is located behind an external wall of the swimfeeder.

7. A swimfeeder as In any preceding claim, wherein the body (22) comprises a base structure (34) having an external surface (40,42,44,46)at the lowermost portion thereof, and a holding surface inwardly disposed with respect to said external surface; and wherein the base weight (70) is held in contact with the holding surface (40,42,44,46) such that a face of the weight (70) provides a bottom surface for the swimfeeder, and at least a substantial portion of the mass of the base weight (70) is located inwardly of said external surface.

## Patentansprüche

1. Ein Futterkorb (20), der einen Körper (22), der eine Köderkammer (49) definiert, und ein mit dem Körper (22) verbundenes Grundgewicht (70) umfasst, wobei der Futterkorb länglich ist und über ein glatt gewölbtes Profil an einer ersten Seite (26) verfügt, und das Grundgewicht (70) bestehend aus einer länglichen Platte mit einer oberen Hauptfläche (72), einer unteren Hauptfläche (74), einer ersten Seite (76) an der ersten Seite (26) des Futterkorbes und einer zweiten gegenüber liegenden Seite (78), wobei die erste Seite des Grundgewichtes so geformt ist, dass sie dem Profil der ersten Seite (26) des Körpers (22) des Futterkorbes entspricht, wobei das Grundgewicht (70) so geformt ist, dass sich der Schwerpunkt des Futterkorbes in Richtung der ersten Seite (26) des Futterkorbes befindet.

2. Ein Futterkorb in Übereinstimmung mit Anspruch 1, wobei die Hauptflächen (72, 74) der Platte über Seiten verfügen, die von der zweiten Seite (78) in Richtung erste Seite (76) nach außen spitz zulaufen.

3. Ein Futterkorb in Übereinstimmung mit den Ansprüchen 1 und 2, wobei sich die Platte an der ersten Seite (26) des Futterkorbes über die gesamte Breite des Futterkorbes erstreckt.

4. Ein Futterkorb in Übereinstimmung mit den Ansprüchen 1 bis 3, wobei die erste Seite (78) der Platte stellenweise verdickt ist.

5. Ein Futterkorb in Übereinstimmung mit den voranstehenden Ansprüchen, wobei eine Fläche des Körpers (22) an der ersten Seite (26) des Futterkorbes und eine Fläche an der ersten Seite (76) der Platte zusammen das besagte glatt gewölbte Profil bilden.

6. Ein Futterkorb in Übereinstimmung mit den Ansprüchen 1 bis 4, wobei sich die erste Seite der Platte hinter einer Außenwand des Futterkorbes befindet.

7. Ein Futterkorb in Übereinstimmung mit den voranstehenden Ansprüchen, wobei der Körper (22) eine Grundkonstruktion (34) mit einer Außenfläche (40, 42, 44, 46) am untersten Teil selbiger und eine Haltefläche umfasst, die im Hinblick auf die besagte Außenfläche nach innen geneigt ist; und wobei das Grundgewicht (70) in Kontakt mit der Haltfläche (40, 42, 44, 46) so gehalten wird, dass die Fläche des Gewichtes (70) eine untere Fläche für den Futterkorb bildet, und mindestens ein wesentlicher Anteil der Masse des Grundgewichtes (70) von der besagten Außenfläche aus gesehen nach innen gerichtet ist.

## Revendications

1. Un swimfeeder (20) composé d'un corps (22) définissant une chambre d'appât (49) et un lest de base (70) engagé avec le corps (22), le swimfeeder ayant une forme allongée et présentant un profil incurvé de forme élancée à un premier bout (26), et le lest de base (70) se composant d'une plaque allongée présentant une face principale supérieure (72), une face principale Inférieure (74), une première extrémité (76) située au premier bout (26) du swimfeeder, et une deuxième extrémité opposée (78), la première extrémité (76) du lest de base étant façonnée de façon à s'harmoniser au profil du premier bout (26) du corps (22) du swimfeeder, dans lequel le lest de base (70) est façonné de sorte que la masse du swimfeeder se situe vers le premier bout (26) du swimfeeder.

2. Un swimfeeder conforme à la revendication 1, dans lequel les faces principales (72, 74) de la plaque présentant des côtés effilés vers l'extérieur de sa deuxième extrémité (78) à sa première extrémité (76).

3. Un swimfeeder conforme aux revendications 1 ou 2, dans lequel, au premier bout (26) du swimfeeder, la plaque s'étend à travers la largeur Intégrale du swimfeeder.

4. Un swimfeeder conforme aux revendications 1 à 3, dans lequel la deuxième extrémité (78) de la plaque présente un épaississement local.

5. Un swimfeeder conforme à une quelconque des revendications précédentes, dans lequel une surface du corps (22) au premier bout (26) du swimfeeder et une surface de la première extrémité (76) de la plaque forment ensemble ledit profil incurvé de forme élancée.

6. Un swimfeeder conforme aux revendications 1 à 4, dans lequel la première extrémité de la plaque est située derrière une paroi externe du swimfeeder.

7. Un swimfeeder conforme à une quelconque des revendications précédentes, dans lequel le corps (22) comprend une structure de base (34) présentant une surface externe (40, 42, 44, 46) sur sa partie la plus basse, et une surface de maintien disposée vers l'Intérieur par rapport à ladite surface externe ; et dans lequel le lest de base (70) est maintenu en contact avec ladite surface de maintien (40, 42, 44, 46) de sorte qu'une face du lest (70) constitue une surface inférieure pour le swimfeeder, et au minimum une partie substantielle de la masse du lest de base (70) est tournée vers l'intérieur de ladite surface externe.
